# EUROPEAN PATENT SPECIFICATION

(11) **EP 4 546 562 B1**
(45) Date of publication and mention of the grant of the patent: **18.11.2026**
(21) Application number: 23846771.6
(22) Date of filing: 23.05.2023
(51) Int. Cl.: H04M 1/02, H04M 1/18, H01Q 9/42, H01Q 1/38, H01Q 1/24

(54) **ANTENNA STRUCTURE, AND ELECTRONIC DEVICE COMPRISING SAME**
ANTENNENSTRUKTUR UND ELEKTRONISCHE VORRICHTUNG DAMIT
STRUCTURE D'ANTENNE ET DISPOSITIF ÉLECTRONIQUE LA COMPRENANT

(30) Priority: 29.07.2022 KR 20220094984; 09.08.2022 KR 20220099446
(43) Date of publication of application: 30.04.2025
(73) Proprietor: Samsung Electronics Co., Ltd., Suwon-si, Gyeonggi-do 16677 (KR)
(72) Inventor: PARK, Jongho, Suwon-si Gyeonggi-do 16677 (KR); PARK, Daehee, Suwon-si Gyeonggi-do 16677 (KR); SAKONG, Min, Suwon-si Gyeonggi-do 16677 (KR); SON, Moonsoo, Suwon-si Gyeonggi-do 16677 (KR)
(74) Representative: Appleyard Lees IP LLP
(86) International application number: PCT/KR2023/007025
(87) International publication number: WO 2024/025110

(56) References cited:
- KR-A- 20200 018 282
- KR-A- 20200 128 172
- KR-A- 20210 152 910
- KR-A- 20220 015 916
- US-A1- 2021 168 229

## Description

### [Technical Field]

Various embodiments of the disclosure relate to an electronic device, for example, to an antenna structure and an electronic device including the same.

### [Background Art]

Thanks to the remarkable advancements in information and communication technology, as well as semiconductor technology, the proliferation and use of various electronic devices have rapidly increased. In particular, recent electronic devices are being developed to enable portable communication.

Electronic devices may refer to devices that perform specific functions based on embedded programs, such as home appliances, electronic notes, portable multimedia players (PMPs), mobile communication terminals, tablet personal computers (PCs), video/audio devices, desktop/laptop computers, vehicle navigation systems, and so on. For example, these electronic devices may output stored information in the form of sound or images. With the increasing integration of electronic devices and the widespread use of ultra-high-speed, large-capacity wireless communication, various functions have recently been integrated into a single electronic device, such as a mobile communication terminal. For example, not only communication functions but also entertainment functions such as gaming, multimedia functions such as music/video playback, communication and security functions for mobile banking, and functions such as schedule management and electronic wallets have been incorporated into a single electronic device. Moreover, these electronic devices are being miniaturized so that users can conveniently carry them.

KR20220015916A discloses an electronic device comprising: a foldable display; a deco member of a resin material formed to surround at least one part of the foldable display; a support member that supports the foldable display, and comprising a metal area connected to the deco member; and a conductive member disposed on the deco member and electrically connected to the metal area. The conductive member may comprise a first conductive member arranged to face the support member, and a second conductive member arranged in parallel with the first conductive member and electrically connected to the first conductive member. The electronic device is capable of discharging a surge flowing into it.

### [Detailed Description of the Invention]

### [Technical Problem]

According to an aspect of the disclosure, there is provided an electronic device according to claim 1.

Optional further features of the electronic device are defined in the dependent claims.

According to an embodiment of the disclosure, the electronic device comprises: a housing including a sidewall including a first metal portion and a first non-metal portion, and a second non-metal portion, wherein the first metal portion is disposed between the first non-metal portion and the second non-metal portion in a first direction; a display disposed within the housing; a circuit board disposed within the housing and electrically connected to the first metal portion; a protective member disposed to surround at least a portion of an edge of the display and connected to the sidewall of the housing; and a first conductive member and a second conductive member disposed on at least a portion of the protective member and spaced apart from each other in the first direction; a feeding portion electrically connected to a communication module disposed on the circuit board; and a ground portion electrically connected to a ground plane of the circuit board, wherein the first metal portion is electrically connected to the feeding portion and the ground portion is configured to transmit and/or receive a radio frequency signal having a first wavelength, and wherein lengths of the first conductive member in the first direction are smaller than a length of the first metal portion in the first direction, wherein the lengths of the first conductive member and the second conductive member in the first direction are less than or equal to half of the first wavelength.

Another electronic device is disclosed which comprises: a housing including a first housing and a second housing configured to provide relative motion to the first housing; a hinge structure rotatably connecting the first housing and the second housing; a display comprising a first display area disposed on the first housing, a second display area disposed on the second housing, and a folding area connecting the first display area and the second display area across the hinge structure; a first protective member disposed to surround at least a portion of an edge of the first display area and connected to the first housing; a second protective member disposed to surround at least a portion of an edge of the second display area and connected to the second housing; and at least one conductive member disposed on at least a portion of the first protective member, wherein the first housing includes a sidewall including a first metal portion and a non-metal portion, and a length of the at least one conductive member in a first direction may be smaller than a length of the first metal portion in the first direction.

Another electronic device is disclosed which comprises a housing including a first housing and a second housing configured to provide relative motion to the first housing; a hinge structure rotatably connecting the first housing and the second housing; a display comprising a first display area disposed on the first housing, a second display area disposed on the second housing, and a folding area connecting the first display area and the second display area across the hinge structure; a first protective member disposed to surround at least a portion of an edge of the first display area and connected to the first housing; a second protective member disposed to surround at least a portion of an edge of the second display area and connected to the second housing; and at least one conductive member disposed on at least a portion of the first protective member, wherein the first housing includes a sidewall including a first metal portion and a non-metal portion, and the first metal portion is configured to transmit and/or receive a radio frequency (RF) signal having a first wavelength, and a length of the at least one conductive member in a first direction may be less than or equal to half of the first wavelength.

### [Brief Description of the Drawings]

FIG. 1 is a block diagram of an electronic device in a network environment according to various embodiments;
FIG. 2 is a diagram illustrating an unfolded state of the electronic device according to an embodiment of the disclosure;
FIG. 3 is a diagram illustrating a folded state of the electronic device according to an embodiment of the disclosure;
FIG. 4 is an exploded perspective view of the electronic device according to an embodiment of the disclosure;
FIG. 5A is a front view illustrating a first housing according to an embodiment of the disclosure;
FIG. 5B is a front view illustrating the first housing and at least one conductive member according to an embodiment of the disclosure;
FIG. 6 is a cross-sectional view taken along line A-A' of FIG. 2 according to an embodiment of the disclosure;
FIG. 7A is a cross-sectional view taken along line A-A' of FIG. 2 according to an embodiment of the disclosure;
FIG. 7B is a cross-sectional view of the display according to an embodiment of the disclosure; and
FIG. 8 is a front view illustrating the first housing and at least one conductive member according to an embodiment of the disclosure.

### [Mode for Carrying out the Invention]

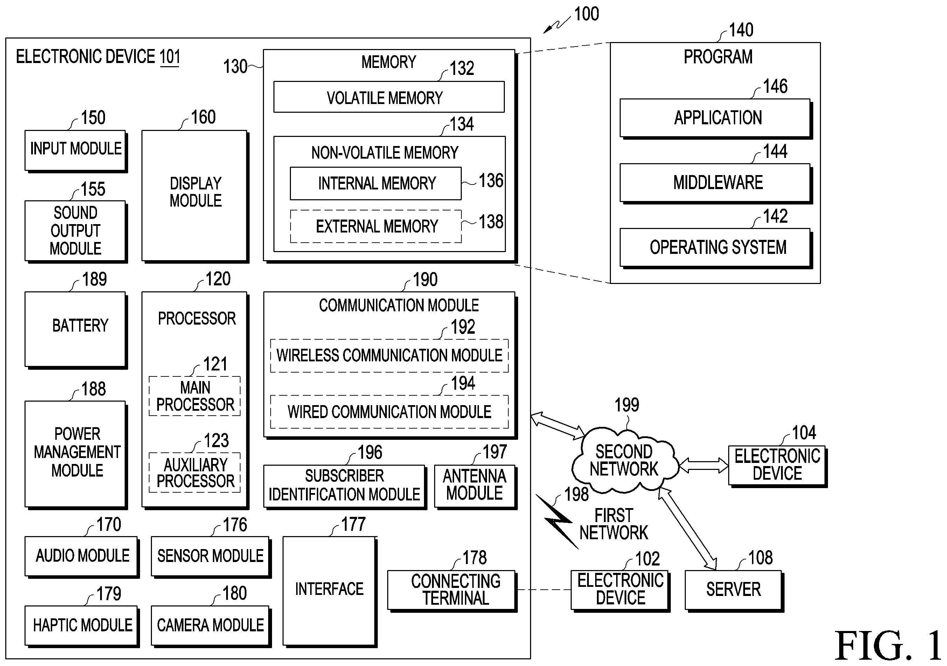

FIG. 1 is a block diagram illustrating an electronic device in a network environment 100 according to various embodiments of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least portion of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as portion of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as portion of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as portion of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a second sensor module configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least portion of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other portions (e.g., radio frequency integrated circuit (RFIC)) than the radiator may be further formed as portion of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least portion of the function or the service. The one or more external electronic devices receiving the request may perform the at least portion of the function or the service requested, or an additional function or an additional service related to the request, and transfer an outcome of the performing to the electronic device 101. The electronic device 101 may provide the outcome, with or without further processing of the outcome, as at least portion of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a P47165EPN1 corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to,'' "connected with," or "connected to" another element (e.g., a second element), it means that the element may be coupled with the other element directly (e.g., wiredly), wirelessly, or via a third element.

As used in the various embodiments of the disclosure, the term "module" may include a unit implemented in hardware, software, or firmware, and may interchangeably be used with other terms, for example, "logic," "logic block," "portion," or "circuitry". A module may be a single integral component, or a minimum unit or portion thereof, adapted to perform one or more functions. For example, according to an embodiment, the module may be implemented in a form of an application-specific integrated circuit (ASIC).

Various embodiments of the disclosure may be implemented as software (e.g., the program 140) including one or more instructions that are stored in a storage medium (e.g., internal memory 136 or external memory 138) that is leadable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium leadable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-leadable storage medium (e.g., compact disc lead only memory (CD-ROM)), or be distributed (e.g., downloaded or uploaded) online via an application store (e.g., Play StoreTM), or between two user devices (e.g., smartphones) directly. If distributed online, at least portion of the computer program product may be temporarily generated or at least temporarily stored in the machine-leadable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

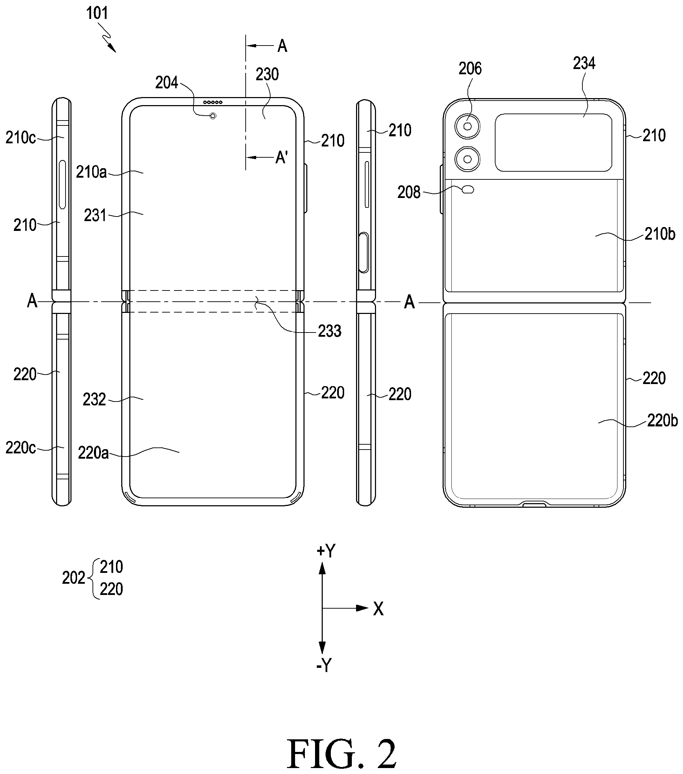

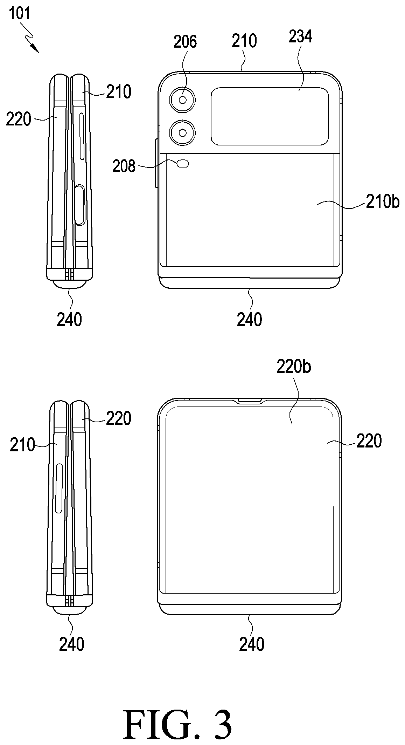

FIG. 2 illustrates an unfolded state of the electronic device according to an embodiment of the disclosure, and FIG. 3 illustrates a folded state of the electronic device according to an embodiment of the disclosure.

The configuration of the electronic device 101 in FIGS. 2 and 3 may be partially or entirely the same as the configuration of the electronic device 101 in FIG. 1.

The embodiments of FIGS. 2 and 3 may be combined with the embodiment of FIG. 1.

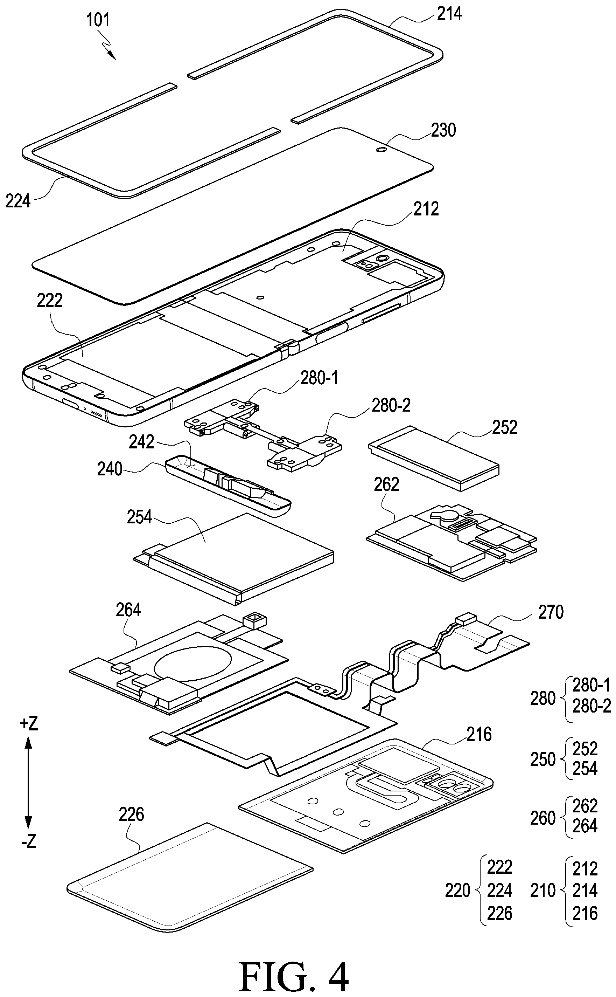

Referring to FIGS. 2 and 3, the electronic device 101 may include a housing 202 for accommodating components (e.g., the hinge structure 280 of FIG. 4) of the electronic device 101 and a flexible display (hereinafter referred to as the display 230) disposed within the space formed by the housing 202. According to an embodiment, the housing 202 may be referred to as a foldable housing. According to an embodiment, the display 230 may be referred to as a foldable display.

According to an embodiment, the housing 202 may include a first housing 210 and a second housing 220 configured to rotate relative to the first housing 210.

According to an embodiment, the first housing 210 and/or the second housing 220 may form at least a portion of the exterior of the electronic device 101. According to an embodiment, the surface on which the display 230 is visually exposed is defined as the front surface (e.g., the first front surface 210a and the second front surface 220a) of the electronic device 101 and/or the housing 202. The surface opposite to the front surface is defined as a rear surface (e.g., the first rear surface 210b and the second rear surface 220b) of the electronic device 101. The surface that at least partially surrounds the space between the front surface and the rear surface is defined as the side surface (e.g., the first side surface 210c and the second side surface 220c) of the electronic device 101.

According to an embodiment, the first housing 210 may be rotatably connected to the second housing 220 using a hinge structure (e.g., hinge structure 280 of FIG. 4). For example, the first housing 210 and the second housing 220 may each be rotatably connected to the hinge structure 280. Accordingly, the electronic device 101 may be configured to transition between a folded state (e.g., FIG. 3) and an unfolded state (e.g., FIG. 2). The electronic device 101 may be configured such that in the folded state, the first front surface 210a may face the second front surface 220a, and in the unfolded state, the direction in which the first front surface 210a faces may be substantially the same as the direction in which the second front surface 220a faces. For example, in the unfolded state, the first front surface 210a may be positioned on substantially the same plane as the second front surface 220a. According to an embodiment, the second housing 220 may allow for relative movement with respect to the first housing 210.

According to an embodiment, the first housing 210 and the second housing 220 may be positioned on either side of a folding axis A and may have a substantially symmetrical shape with respect to the folding axis A. The first housing 210 and the second housing 220 may be configured such that the angle between the first housing 210 and the second housing 220 may vary depending on whether the electronic device 101 is in an unfolded state, a folded state, or an intermediate state between the unfolded state and the folded state.

According to an embodiment, the electronic device 101 may include a hinge cover 240. At least a portion of the hinge cover 240 may be positioned between the first housing 210 and the second housing 220. According to an embodiment, the hinge cover 240 may be concealed by a portion of the first housing 210 and the second housing 220, or exposed to the outside of the electronic device 101, depending on the state of the electronic device 101. According to an embodiment, the hinge cover 240 may protect a hinge structure (e.g., the hinge structure 280 of FIG. 4) from impacts applied from the outside of the electronic device 101. According to an embodiment, the hinge cover 240 may be interpreted as a hinge housing for protecting the hinge structure (e.g., hinge structure 280 of FIG. 4).

According to an embodiment, as illustrated in FIG. 2, when the electronic device 101 is in an unfolded state, the hinge cover 240 may be concealed by the first housing 210 and the second housing 220, and may not be exposed to the outside. In another example, as illustrated in FIG. 3, when the electronic device 101 is in a folded state (e.g., fully folded state), the hinge cover 240 may be exposed to the outside between the first housing 210 and the second housing 220. In another example, when the first housing 210 and the second housing 220 are in an intermediate state (folded with a certain angle), the hinge cover 240 may be partially exposed to the outside between the first housing 210 and the second housing 220. However, in this case, the exposed area may be smaller than that of the fully folded state. In an embodiment, the hinge cover 240 may include a curved surface.

According to an embodiment, the display 230 may visually provide information to outside the electronic device 101 (e.g., the user). For example, the display 230 may include a hologram device, a projector, and a control circuit for controlling a corresponding device. According to an embodiment, the display 230 may include a touch sensor configured to detect touch or a pressure sensor configured to measure the intensity of a force generated by the touch.

According to an embodiment, the display 230 may refer to a display of which at least a portion can be transformed into a flat or curved surface. For example, the display 230 may be configured to vary in response to the relative movement of the second housing 220 with respect to the first housing 210. According to an embodiment, the display 230 may include a folding area 233, a first display area 231 disposed on one side (e.g., the upper side (the +Y direction)) with reference to the folding area 233, and a second display area 232 disposed on the other side (e.g., the lower side (the -Y direction)). According to an embodiment, the folding area 233 may be positioned above a hinge structure (e.g., the hinge structure 280 of FIG. 4). For example, at least a portion of the folding area 233 may face the hinge structure 280. According to an embodiment, the first display area 231 may be disposed on the first housing 210, and the second display area 232 may be disposed on the second housing 220. According to an embodiment, the display 230 may be accommodated within the first housing 210 and the second housing 220.

However, the division of the display 230 into areas as shown in FIG. 2 is exemplary, and the display 230 may be divided into a plurality of areas (e.g., four or more, or two) depending on the structure or function.

In addition, in the embodiment illustrated in FIG. 2, the area of the display 230 may be divided by the folding axis (A-axis) or the folding area 233 extending parallel to the X-axis. However, in another embodiment, the area of the display 230 may be also divided based on another folding area (e.g., a folding area parallel to the Y-axis) or another folding axis (e.g., a folding axis parallel to the Y-axis). According to an embodiment, the display 230 may be coupled to or disposed adjacent to a touch detection circuit, a pressure sensor configured to measure the intensity (pressure) of a touch, and/or a digitizer configured to detect a magnetic field type stylus pen.

According to an embodiment, the electronic device 101 may include a rear display 234. The rear display 234 may be disposed to face a direction different from that of the display 230. For example, the display 230 may be visually exposed through the front surface (e.g., the first front surface 210a and/or the second front surface 220a) of the electronic device 101, and the rear display 234 may be visually exposed through the rear surface (e.g., the first rear surface 210b) of the electronic device 101.

According to an embodiment, the electronic device 101 may include at least one camera module 204 or 206, and a flash 208. According to an embodiment, the electronic device 101 may include a front camera module 204 exposed through the front side (e.g., the first front surface 210a) and/or a rear camera module 206 exposed through the rear side (e.g., the first rear surface 210b). The camera module 204 or 206 may include one or more lenses, an image sensor, a flash, and/or an image signal processor. The flash 208 may include a light-emitting diode (LED) or a xenon lamp. According to an embodiment, two or more lenses (e.g., an infrared camera lens, a wide-angle lens, and a telephoto lens) and image sensors may be arranged on one side of the electronic device 101. The configuration of the front camera module 204 and/or the rear camera module 206 may be partially or entirely the same as the configuration of the camera module 180 shown in FIG. 1.

FIG. 4 is an exploded perspective view of an electronic device according to an embodiment of the disclosure.

The embodiment of FIG. 4 may be combined with the embodiments of FIGS. 1 to 3.

Referring to FIG. 4, the electronic device 201 may include a first housing 210, a second housing 220, a display 230, a hinge cover 240, a battery 250, a printed circuit board 260, a flexible printed circuit board 270, and a hinge structure 280. The configuration of the first housing 210, the second housing 220, the display 230, and the hinge cover 240 in FIG. 4 may be partially or entirely the same as the configuration of the first housing 210, the second housing 220, the display 230, and the hinge cover 240 in FIG. 2 and/or FIG. 3.

According to an embodiment, the electronic device 101 may include a first support member 212 and a second support member 222. For example, the first housing 210 may include the first support member 212, and the second housing 220 may include the second support member 222. According to an embodiment, the first support member 212 and/or the second support member 222 may support components (e.g., the display 230, the battery 250, and the printed circuit board 260) of the electronic device 101.

According to an embodiment, the first support member 212 and/or the second support member 222 may be formed of metal and/or non-metal (e.g., polymer) materials. According to an embodiment, the first support member 212 may be disposed between the display 230 and the battery 250. For example, the display 230 may be coupled to one surface of the first support member 212, and the battery 250 and a printed circuit board 260 may be disposed on the other side.

According to an embodiment, the electronic device 101 may include a first protective member 214 and a second protective member 224. For example, the first housing 210 may include the first protective member 214, and the second housing 220 may include the second protective member 224. According to an embodiment, the protective members 214 and 224 may protect the display 230 from external impacts. For example, the first protective member 214 may surround at least a portion of the display 230 (e.g., the first display area 231 in FIG. 2), and the second protective member 224 may surround at least a portion of another part of the display 230 (e.g., the second display area 232 in FIG. 2). According to an embodiment, the first protective member 214 may be referred to as a first cover member, and the second protective member 214 may be referred to as a second cover member.

According to an embodiment, the housings 210 and 220 may include a first rear plate 216 and a second rear plate 226. For example, the first housing 210 may include the first rear plate 216 connected to the first support member 212, and the second housing 220 may include the second rear plate 226 connected to the second support member 222. According to an embodiment, the rear plates 216 and 226 may form part of the exterior of the electronic device 101. For example, the first rear plate 216 may form a first rear surface (e.g., the first rear surface 210b in FIG. 2 and FIG. 3), and the second rear plate 226 may form a second rear surface (e.g., the second rear surface 220b in FIG. 2 and FIG. 3). According to an embodiment, a first battery 252 and a first printed circuit board 262 may be disposed between the first support member 212 and the first rear plate 216, and a second battery 254 and a second printed circuit board 264 may be disposed between the second support member 222 and the second rear plate 226.

According to an embodiment, the hinge cover 240 may accommodate at least a portion of the hinge structure 280. For example, the hinge cover 240 may include an accommodation groove 242 for accommodating the hinge structure 280. According to an embodiment, the hinge cover 240 may be coupled to the hinge structure 280. According to an embodiment, when the electronic device 101 is in an unfolded state, at least a portion of the hinge cover 240 may be positioned between the hinge structure 280 and the housings 210 and 220.

According to an embodiment, the battery 250 may be a device for supplying electric power to at least one element of the electronic device 101 and may include a non-rechargeable primary battery, a rechargeable secondary battery, or a fuel cell. The battery 250 may be integrally placed inside the electronic device 101 or may be detachably attached to the electronic device 101. According to an embodiment, the battery 250 may include a first battery 252 disposed in the first housing 210 and a second battery 254 disposed in the second housing 220. For example, the first battery 252 may be disposed on the first support member 212, and the second battery 254 may be disposed on the second support member 222.

According to an embodiment, a processor (e.g., the processor 120 in FIG. 1), memory (e.g., the memory 130 in FIG. 1), and/or an interface (e.g., the interface 177 in FIG. 1) may be mounted on the printed circuit board 260. According to an embodiment, the printed circuit board 260 may include a first printed circuit board 262 disposed in the first housing 210 and a second printed circuit board 264 disposed in the second housing 220.

According to an embodiment, the flexible printed circuit board (FPCB) 270 may electrically connect a component (e.g., the first printed circuit board 262) positioned in the first housing 210 and a component (e.g., the second printed circuit board 264) positioned in the second housing 220. According to an embodiment, at least a portion of the flexible circuit board 270 may extend across the hinge cover 240 and/or the hinge structure 280. For example, a portion of the flexible circuit board 270 may be disposed in the first housing 210, and the other portion may be disposed in the second housing 220. According to an embodiment, the flexible circuit board 270 may be connected to an antenna or to the display 230.

According to an embodiment, the hinge structure 280 may be connected to the first housing 210 and the second housing 220. According to an embodiment, the first housing 210 may rotate relative to the second housing 220 using the hinge structure 280. According to an embodiment, the hinge structure 280 may rotatably connect the first housing 210 and the second housing 220 between a folded state (e.g., FIG. 3) and an unfolded state (e.g., FIG. 2).

According to an embodiment, the hinge structure 280 may include a plurality of hinge structures 280-1 and 280-2 arranged in parallel. For example, the hinge structure 280 may include a first hinge structure 280-1 and a second hinge structure 280-2 spaced apart from the first hinge structure 280-1. According to an embodiment, the first hinge structure 280-1 may be symmetrical to the second hinge structure 280-2 with respect to the longitudinal direction (e.g., the Y-axis direction) of the electronic device 101.

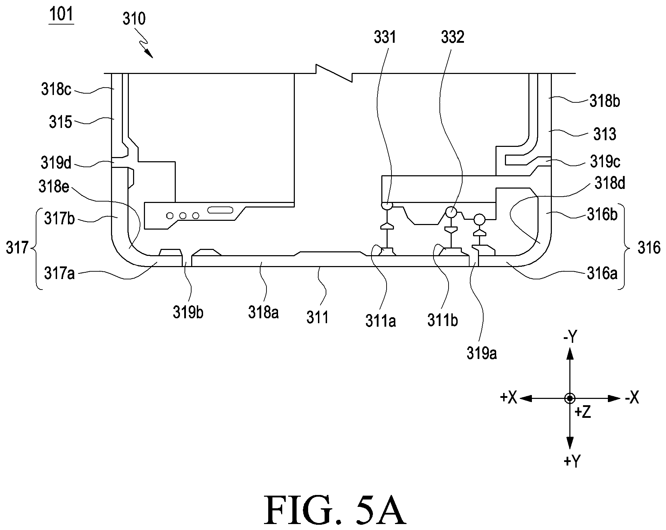

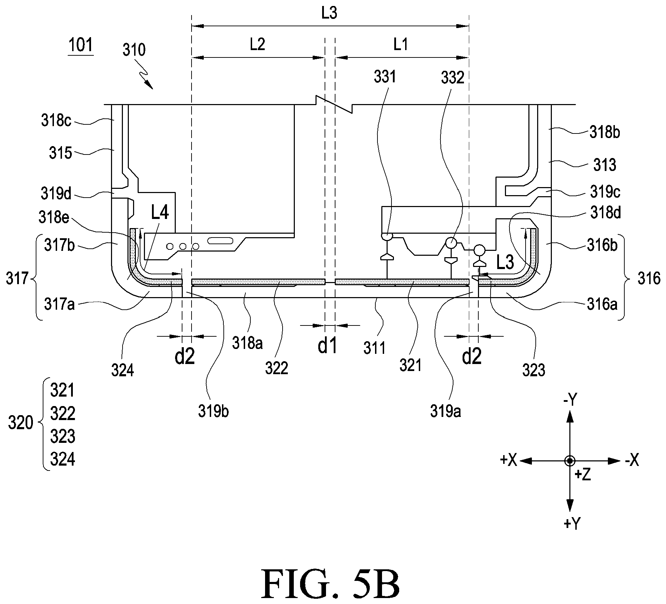

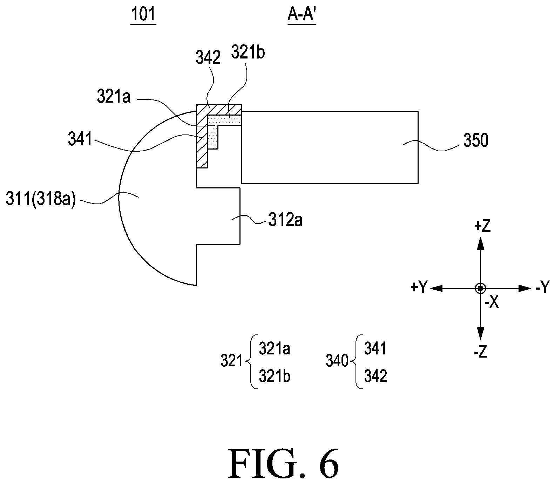

FIG. 5A is a front view illustrating the first housing according to an embodiment of the disclosure. FIG. 5B is a front view illustrating the first housing and at least one conductive member according to an embodiment of the disclosure. FIG. 6 is a cross-sectional view taken along line A-A' of FIG. 2 according to an embodiment of the disclosure.

The electronic device 101 of FIG. 5A is shown in a state where the at least one conductive member 320 of FIG. 5B is omitted for convenience of description, but the embodiments of the disclosure may be understood to include at least one conductive member 320.

The embodiments of FIGS. 5A to 6 may be combined with the embodiments of FIGS. 1 to 4.

FIGS. 5A to 6 illustrate the electronic device 101, including, for example, the first housing 310 (e.g., the first housing 210 of FIGS. 2 to 4) and components directly or indirectly connected (or disposed) to the first housing 310. However, the embodiments of the disclosure are not limited thereto, and components directly or indirectly connected (or disposed) to the second housing (e.g., the second housing 220 of FIGS. 2 to 4) and the second housing may be understood or applied in the same or a similar manner.

Referring to FIGS. 5A to 6, an electronic device 101 (e.g., the electronic device 101 of FIGS. 1 to 4) may include a first housing 310, at least one conductive member 320, a feeding portion 331, a ground portion 332, a first protective member 340, and/or a display 350.

The configuration of the first housing 310 in FIGS. 5A to 6 may be partially or entirely the same as the configuration of the first housing 210 in FIGS. 2 to 4 or the first support member 212 in FIG. 4. The configuration of the first protective member 340 in FIG. 6 may be partially or entirely the same as the configuration of the first protective member 214 in FIG. 4. The configuration of the display 350 in FIG. 6 may be partially or entirely the same as the configuration of the display 230 in FIGS. 2 to 4.

According to an embodiment, the first housing 310 may be formed of a metal material and/or a non-metal material (e.g., a polymer). According to an embodiment, the first housing 310 may support at least a portion (e.g., the first display area 231 in FIG. 2) of the display (e.g., the display 230 in FIGS. 2 to 4).

According to an embodiment, the first housing 310 may include the (1-1)th sidewall 311, the (1-2)th sidewall 313, and the (1-3)th sidewall 315. According to an embodiment, the (1-1)th sidewall 311, the (1-2)th sidewall 313, and the (1-3)th sidewall 315 may form a side surface (e.g., the side surface 210c of the first housing 210 of FIG. 2) of the first housing 310

According to an embodiment, the (1-1)th sidewall 311 may extend in the width direction (e.g., the X-axis direction in FIG. 2) of the electronic device 101. According to an embodiment, the (1-2)th sidewall 313 may extend in the longitudinal direction (e.g., the Y-axis direction in FIG. 2) of the electronic device 101. According to an embodiment, one end of the (1-2)th sidewall 313 may be connected to one end of the (1-1)th sidewall 311. According to an embodiment, the (1-3)th sidewall 315 may extend in the longitudinal direction (e.g., the Y-axis direction in FIG. 2) of the electronic device 101. According to an embodiment, one end of the (1-3)th sidewall 315 may be connected to the other end of the (1-1)th sidewall 311, which is opposite to the one end of the (1-1)th sidewall 311. According to an embodiment, the (1-2)th sidewall 313 and the (1-3)th sidewall 315 may be arranged substantially parallel to each other.

According to an embodiment, the first housing 310 may include at least one corner area 316 or 317. According to an embodiment, the at least one corner area 316 or 317 may include a first corner area 316 or a second corner area 317.

According to an embodiment, the first corner area 316 may be formed by a combination of a portion of the (1-1)th sidewall 311 and a portion of the (1-2)th sidewall 313. According to an embodiment, the first corner area 316 may include a (1-1)th corner portion 316a forming at least a portion of the (1-1)th sidewall 311 and a (1-2)th corner portion 316b forming at least a portion of the (1-2)th sidewall 313. According to an embodiment, the (1-1)th corner portion 316a and the (1-2)th corner portion 316b may be disposed generally perpendicular to each other. According to an embodiment, the portion where the (1-1)th corner portion 316a and the (1-2)th corner portion 316b are connected may have a curved shape. According to an embodiment, the portion where the (1-1)th corner portion 316a and the (1-2)th corner portion 316b are connected may have an angled shape.

According to an embodiment, the second corner area 317 may be formed by a combination of a portion of the (1-1)th sidewall 311 and a portion of the (1-3)th sidewall 315. According to an embodiment, the second corner area 317 may include a (2-1)th corner portion 317a forming at least a portion of the (1-1)th sidewall 311 and a (2-2)th corner portion 317b forming at least a portion of the (1-2)th sidewall 313. According to an embodiment, the (2-1)th corner portion 317a and the (2-2)th corner portion 317b may be disposed to be generally perpendicular. According to an embodiment, the portion where the (2-1)th corner portion 317a and the (2-2)th corner portion 317b are connected may have a curved shape. According to an embodiment, the portion where the (2-1)th corner portion 317a and the (2-2)th corner portion 317b are connected may have an angled shape.

According to an embodiment, the first housing 310 may include at least one metal portion 318a, 318b, 318c, 318d, and 318e, and at least one non-metal portion 319a, 319b, 319c, and 319d.

According to an embodiment, the at least one metal portion 318a, 318b, 318c, 318d, and 318e may include a first metal portion 318a, a second metal portion 318b, a third metal portion 318c, a fourth metal portion 318d, and a fifth metal portion 318e.

According to an embodiment, the at least one non-metal portion 319a, 319b, 319c, and 319d may include a first non-metal portion 319a, a second non-metal portion 319b, a third non-metal portion 319c, and a fourth non-metal portion 319d.

According to an embodiment, the first metal portion 318a may form at least a portion of the (1-1)th sidewall 311. According to an embodiment, the second metal portion 318b may form at least a portion of the (1-2)th sidewall 313. According to an embodiment, the third metal portion 318c may form at least a portion of the (1-3)th sidewall 315. According to an embodiment, at least a portion of the fourth metal portion 318d may form at least a portion (e.g., 316a) of the (1-1)th sidewall 311, and the remaining portion may form at least a portion (e.g., 316b) of the (1-2)th sidewall 313. According to an embodiment, the fourth metal portion 318d may form the first corner area 316. According to an embodiment, at least a portion of the fifth metal portion 318e may form at least a portion (e.g., 317a) of the (1-1)th sidewall 311, and the remaining portion may form at least a portion (e.g., 317b) of the (1-3)th sidewall 313.

According to an embodiment, the first non-metal portion 319a may be disposed between the first metal portion 318a and the fourth metal portion 318d. According to an embodiment, the first non-metal portion 319a may be connected (or coupled) to the first metal portion 318a and the fourth metal portion 318d and may form at least a portion of the (1-1)th sidewall 311. According to an embodiment, the first non-metal portion 319a may also be defined and referred to as a first non-metal area or a first segmented portion.

According to an embodiment, the second non-metal portion 319b may be disposed between the first metal portion 318a and the fifth metal portion 318e. According to an embodiment, the second non-metal portion 319b may be connected (or coupled) to the first metal portion 318a and the fifth metal portion 318e and may form at least a portion of the (1-1)th sidewall 311. According to an embodiment, the second non-metal portion 319b may also be defined and referred to as a second non-metal area or a second segmented portion.

According to an embodiment, the third non-metal portion 319c may be disposed between the second metal portion 318b and the fourth metal portion 318d. According to an embodiment, the third non-metal portion 319c may be connected (or coupled) to the second metal portion 318b and the fourth metal portion 318d and may form at least a portion of the (1-2)th sidewall 313. According to an embodiment, the third non-metal portion 319c may also be defined and referred to as a third non-metal area or a third segmented portion.

According to an embodiment, the fourth non-metal portion 319d may be disposed between the third metal portion 318c and the fifth metal portion 318e. According to an embodiment, the fourth non-metal portion 319d may be connected (or coupled) to the third metal portion 318c and the fifth metal portion 318e and may form at least a portion of the (1-3)th sidewall 315. According to an embodiment, the fourth non-metal portion 319d may also be defined and referred to as a fourth non-metal area or a fourth segmented portion.

According to an embodiment, the first metal portion 318a may include a first connector 311a or a second connector 311b spaced apart from the first connector 311a. According to an embodiment, the first connector 311a or the second connector 311b may be defined and interpreted as a sub-configuration of the (1-1)th sidewall 311.

According to an embodiment, the electronic device 101 may further include a feeding portion 331 and a ground portion 332.

According to an embodiment, the feeding portion 331 may be configured to be electrically connected to a first printed circuit board (e.g., the first printed circuit board 242 of FIG. 4) disposed in the first housing 310. According to an embodiment, the feeding portion 331 may electrically connect the first connector 311a and the first printed circuit board. According to an embodiment, the feeding portion 331 may include a conductive path. According to an embodiment, the conductive path of the feeding portion 331 may electrically connect a communication module (e.g., the communication module 190 of FIG. 1) mounted (or disposed) on the first printed circuit board and the first connector 311a. According to an embodiment, the communication module may be electrically connected to the first connector 311a and the first metal portion 318a using the conductive path of the feeding portion 331.

According to an embodiment, the first metal portion 318a may form a first antenna radiator configured to transmit and/or receive an RF (radio frequency) signal having a first wavelength.

According to an embodiment, the ground portion 332 may be configured to be electrically connected to a first printed circuit board (e.g., the first printed circuit board 242 of FIG. 4) disposed in the first housing 310. According to an embodiment, the ground portion 332 may electrically connect the second connector 311b and the first printed circuit board. According to an embodiment, the ground portion 332 may include a conductive path. According to an embodiment, the conductive path of the ground portion 332 may electrically connect the ground plane of the first printed circuit board and the second connector 311b. According to an embodiment, the ground portion 332 may provide a ground plane of the first printed circuit board to the first antenna radiator, which is formed by the first metal portion 318a.

According to an embodiment, at least one of the second metal portion 318b, the third metal portion 318c, the fourth metal portion 318d, or the fifth metal portion 318e may be electrically connected to a separate feeding portion and ground portion, different from the feeding portion 331 and the ground portion 332, to form a second to a fifth antenna radiator.

According to an embodiment, each of the first metal portion 318a to the fifth metal portion 318e may form a different antenna radiator.

According to an embodiment, the first protective member 340 may be disposed to surround at least a portion of the edge of the display 450 (e.g., at least a portion of the edge of the first display area 231 in FIG. 2).

According to an embodiment, the first protective member 340 may include a first protective portion 341 connected to the (1-1)th sidewall 311 (or the first metal portion 318a) and a second protective portion 342 extending from the first protective portion 341 and facing the outside of the electronic device 101. According to an embodiment, the first protective member 340 may also be defined and referred to as a first deco member.

According to an embodiment, the second protective portion 342 of the first protective member 340 may be disposed on a different plane from at least a portion of the display 450. According to an embodiment, one surface (e.g., the surface facing the +Z direction of FIG. 6) of the second protective portion 342 may be disposed to protrude from one surface (e.g., the surface facing the +Z direction of FIG. 6) of the display 350. According to an embodiment, the second protective portion 342 may be defined and interpreted as being disposed to be stepped from the display 350.

According to an embodiment, the first protective member 340 may contact a second protective member (e.g., the second protective member 224 of FIG. 4) when the electronic device 101 is in the folded state (e.g., FIG. 3). According to an embodiment, since the first protective member 340 and the second protective member are arranged to protrude from the display 450, when the electronic device 101 is folded, the first protective member 340 and the second protective member may contact each other, preventing direct contact between the first display area (e.g., the first display area 231 of FIG. 2) and the second display area (e.g., the second display area 232 of FIG. 2)

According to an embodiment, the first protective member 340 may be formed such that the first protective portion 341 and the second protective portion 342 are vertically connected, but is not limited to this. According to an embodiment, at least one portion of the first protective member 340 may be connected to the (1-1)th sidewall 311, another portion of the first protective member 340 may be connected to the (1-2)th sidewall 313, and yet another portion of the first protective member 340 may be connected to the (1-3)th sidewall 315.

According to an embodiment, the electronic device 101 may further include at least one conductive member 320.

According to an embodiment, the at least one conductive member 320 may include at least one of a conductive sheet, a conductive fabric, a conductive film, a conductive paint, a plating layer, a conductive tape, or a plating tape.

According to an embodiment, the at least one conductive member 320 may be disposed on at least a portion of the first protective member 340. According to an embodiment, the at least one conductive member 320 may be configured to be adhered to an inner portion (e.g., a portion facing the inside of the electronic device 101) of the first protective member 340.

According to an embodiment, at least one conductive member 320 may limit the inflow of static electricity into the display 350. For example, as the first metal portion 318a through the fifth metal portion 318e, which form the antenna radiators, are positioned adjacent to the display 350, there is a concern that static electricity generated by the antenna radiators may flow into the display 350 when antenna signals are transmitted and received.

According to an embodiment, at least one conductive member 320, formed of a metallic material, may limit the inflow of static electricity generated by the antenna radiators into the display 350.

According to an embodiment, the at least one conductive member 320 may include a first conductive member 321, a second conductive member 322, a third conductive member 323, and a fourth conductive member 324.

According to an embodiment, the first conductive member 321 or the second conductive member 322 may be adhered to a portion of the first protective member 340 that is connected to the first metal portion 318a. According to an embodiment, the first conductive member 321 or the second conductive member 322 may be arranged substantially along a straight line (e.g., a line parallel to the X axis of FIG. 5B).

According to an embodiment, the first conductive member 321 may include a (1-1)th conductive portion 321a adhered to at least a portion of the first protective portion 341 and a (1-2)th conductive portion 321b adhered to at least a portion of the second protective portion 342.

According to an embodiment, the first conductive member 321 or the second conductive member 322 may be spaced apart by a first distance d1 in the first direction (e.g., the X-axis direction of FIG. 5B). According to an embodiment, the first distance d1 may be approximately 1.1 mm or less. For example, the first distance d1 may be approximately 1.0 mm.

According to an embodiment, the third conductive member 323 may be adhered to the portion of the first protective member 340 that is connected to the fourth metal portion 318d. According to an embodiment, the third conductive member 323 may have a shape where at least a portion is bent or at least a portion is angled to correspond to the shape of the fourth metal portion 318d.

According to an embodiment, at least a portion of the third conductive member 323 may be positioned substantially along a straight line (e.g., a line parallel to the X-axis of FIG. 5b) with respect to the first conductive member 321. According to an embodiment, the first conductive member 321 may be spaced apart from the third conductive member 323 by a second distance d2 in the first direction (e.g., the X-axis direction of FIG. 5B). According to an embodiment, the second distance d2 may be approximately 1.1 mm or less. For example, the first distance d2 may be approximately 1.0 mm.

According to an embodiment, at least a portion of the fourth conductive member 324 may be positioned substantially along a straight line (e.g., a line parallel to the Y-axis of FIG. 5) with respect to the second conductive member 322. According to an embodiment, the second conductive member 322 may be spaced apart from the fourth conductive member 324 by a third distance d3 in the first direction (e.g., the X-axis direction of FIG. 5B). According to an embodiment, the third distance d3 may be approximately 1.1 mm or less. For example, the third distance d3 may be approximately 1.0 mm.

According to an embodiment, the gap d2 between the first conductive member 321 and the third conductive member 323 in the first direction (e.g., the X-axis direction of FIG. 5b) may be disposed to overlap at least a portion of the first non-metal portion 319a. For example, the gap d2 and the first non-metal portion 319a may be disposed to overlap in the second direction (e.g., the Y-axis direction of FIG. 5b), which is perpendicular to the first direction.

According to an embodiment, the gap d3 between the second conductive member 322 and the fourth conductive member 324 in the first direction (e.g., the X-axis direction of FIG. 5b) may be disposed to overlap at least a portion of the second non-metal portion 319b. For example, the gap d3 and the second non-metal portion 319b may be disposed to overlap in the second direction (e.g., the Y-axis direction of FIG. 5b).

According to an embodiment, the length L1 of the first conductive member 321 in the first direction may be smaller than the length L3 of the first metal portion 318a in the first direction. According to an embodiment, the length L1 of the second conductive member 322 in the first direction may be smaller than the length L3 of the first metal portion 318a in the first direction.

For example, when the length of the first conductive member 321 or the second conductive member 322 is equal to or greater than the length of the first metal portion 318a, the antenna gain of the first antenna radiator formed by the first metal portion 318a may be reduced. For example, when the length of the first conductive member 321 or the second conductive member 322 is equal to or greater than the length of the first metal portion 318a, there is a concern that the first conductive member 321 or the second conductive member 322 may cause parasitic resonance with respect to the first antenna radiator formed by the first metal portion 318a.

According to an embodiment, when the length of the first conductive member 321 or the second conductive member 322 is smaller than the length of the first metal portion 318a, the first antenna radiator may limit the occurrence of parasitic resonance caused by the first conductive member 321 or the second conductive member 322.

According to an embodiment, the first antenna radiator formed by the first metal portion 318a may be configured to transmit and/or receive, for example, an RF (radio frequency) signal having a first wavelength. For example, the first antenna radiator may be configured to transmit and/or receive an RF signal having a first frequency, and a wavelength of the RF signal with respect to the first frequency may be a first wavelength. For example, the first antenna radiator may be configured to transmit and/or receive an RF signal having both a first frequency and a first wavelength.

According to an embodiment, the length L1 of the first conductive member 321 in the first direction may be less than or equal to half (1/2 wavelength) of the first wavelength of the RF signal transmitted and/or received by the first antenna radiator. According to an embodiment, when the length L1 of the first conductive member 321 in the first direction is less than or equal to half of the first wavelength, the generation of parasitic resonance with respect to the first antenna radiator may be limited. For example, when the length of the first wavelength of the RF signal transmitted and/or received by the first antenna radiator is "M," the length L1 of the first conductive member 321 in the first direction may be "M/2" or less, which is half of "M".

According to an embodiment, the length L2 of the second conductive member 322 in the first direction may less than or equal to half (1/2 wavelength) of the first wavelength of the RF signal transmitted and/or received by the first antenna radiator. According to an embodiment, when the length L2 of the second conductive member 322 in the first direction is less than or equal to half of the first wavelength, the occurrence of parasitic resonance with respect to the second antenna radiator may be limited. For example, when the length of the first wavelength of the RF signal transmitted and/or received by the first antenna radiator is "M", the length L2 of the second conductive member 322 in the first direction may be "M/2" or less, which is half of "M".

According to an embodiment, the lengths of the first conductive member 321 and the second conductive member 322 in the first direction may be substantially the same.

According to an embodiment, the resonant frequency of the first antenna radiator formed by the first metal portion 318a may be adjusted by adjusting the length of the first metal portion 318a disposed between the first non-metal portion 319a and the second non-metal portion 319b in the first direction. According to an embodiment, the electronic device 101 may suppress parasitic resonance by adjusting the length of the first conductive member 321 in the first direction or the length of the second conductive member 322 in the first direction to be equal or less than half of the wavelength value in the frequency band of the adjusted first antenna radiator.

According to an embodiment, the length L3 (the length along a straight line) of the third conductive member 323 in the unfolded state may be less than or equal to half (1/2 wavelength) of the wavelength of the RF signal transmitted and/or received by the fourth antenna radiator formed by the fourth metal portion 318d.

According to an embodiment, the length L4 (the length along a straight line) of the fourth conductive member 324 in the unfolded state may be less than or equal to half (1/2 wavelength) of the wavelength of the RF signal transmitted and/or received by the fifth antenna radiator formed by the fifth metal portion 318e.

According to an embodiment, the first conductive member 321 may be disposed to overlap at least a portion of the first metal portion 318a in the second direction (e.g., the Y-axis direction of FIG. 5B or FIG. 6) from the first metal portion 318a toward the display 350. For example, at least a portion of the first conductive member 321 may be disposed to overlap the first portion of the first metal portion 318a in the second direction.

According to an embodiment, the second conductive member 322 may be disposed to overlap at least a portion of the first metal portion 318a in the second direction (e.g., the Y-axis direction of FIG. 5B or FIG. 6) from the first metal portion 318a toward the display 350. For example, at least a portion of the second conductive member 322 may be disposed to overlap a second portion, which is different from the first portion of the first metal portion 318a, in the second direction. For example, the second conductive member 322 may be spaced apart from the first conductive member 321 in the first direction (e.g., the X-axis direction of FIG. 5B).

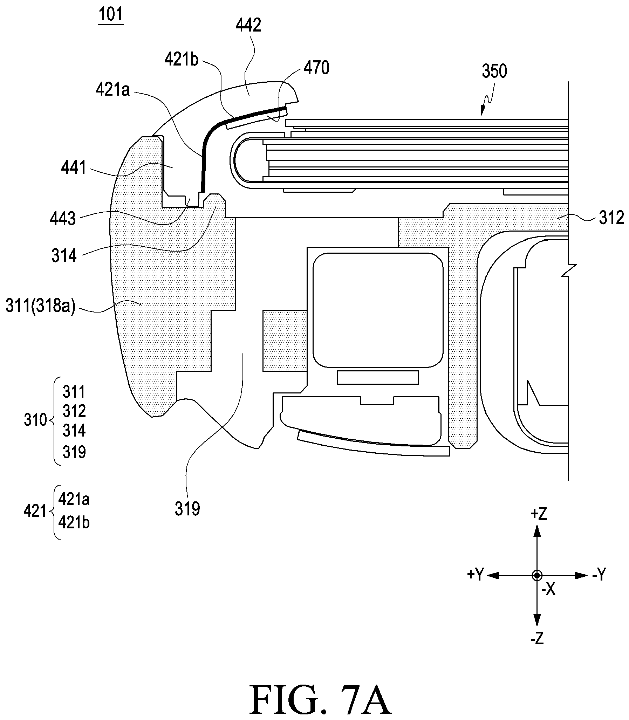

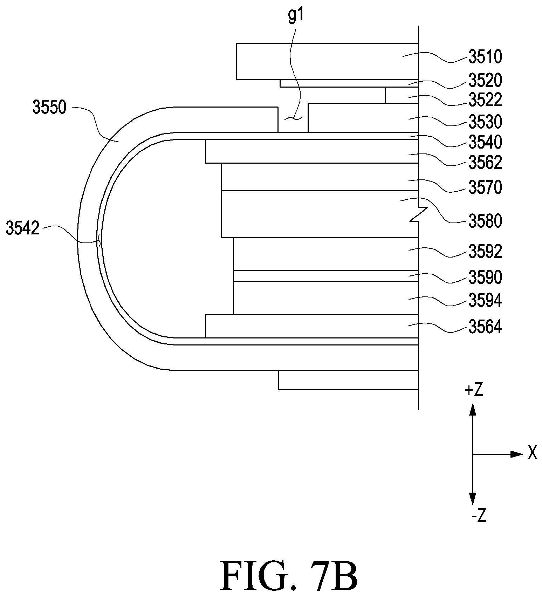

FIG. 7A is a cross-sectional view taken along line A-A' of FIG. 2, according to an embodiment of the disclosure. FIG. 7B is a cross-sectional view of the display according to an embodiment of the disclosure. The embodiments illustrated in FIGS. 7A and 7B may be combinable with the embodiments shown in FIGS. 1 to 6.

Referring to FIGS. 7A and 7B, the electronic device 101 (e.g., the electronic device 101 in FIGS. 1 to 6) may include a first housing 310, a display 350, a first conductive member 421, a first protective member 440, or an insulating member 470.

The configuration of the first housing 310, the display 350, the first conductive member 421, and the first protective member 440 of FIGS. 7A and 7B may be partially or entirely the same as the configuration of the first housing 310, the display 350, the first conductive member 321, and the first protective member 340 of FIGS. 5A to 6.

Referring to FIG. 7B, the display 350 may include components for providing visual information or images to the outside (e.g., a user) of the electronic device 101.

According to an embodiment, the display 350 may include at least one of a protective film 3510 for protecting the outer surface of the display 350, a window member 3520 disposed below the protective film 3510 (e.g., in the -Z direction), a polarizing layer 3530 disposed on the window member 3520 via an adhesive 3522, a display panel 3540 disposed below the polarizing layer 3530 and configured to display visual information, a bending protection layer (BPL) 3550 for protecting the display panel 3540, a first protective film 3562 disposed below the display panel 3540, a cushion layer 3570 disposed below the first protective film 3562, a display support plate 3580 disposed below the cushion layer 3570, a column spacer 3590 for spacing apart substrates (e.g., a color filter substrate 3592 and a TFT substrate 3594), or a second protective film 3564.

According to various embodiments, at least a portion of the window member 3520 may be formed of a material that is substantially transparent and flexible. For example, the window member 3520 may be formed of ultra-thin glass (UTG) or polyimide film. The display panel 3540 may be exposed to the outside of the electronic device 101 through the window member 3520.

According to various embodiments, a portion of the display panel 3540 may be bent, and the bent portion of the display panel 3540 may be referred to as a bending portion 3542. According to an embodiment, the bending portion 3542 may be electrically connected to an electronic component (e.g., a display driving circuit). According to an embodiment, the display panel 3540 may extend through the bending portion 3542 and surround at least a portion of the other components (e.g., the cushion layer 3570 or the display support plate 3580) of the display 350.

According to various embodiments, the bending protection layer 3550 may reduce the tensile stress applied to the display panel 3540. According to an embodiment, the bending protection layer 3550 may extend along the bending portion 3542 of the display panel 3540. The bending protection layer 3550 may support the bending portion 3542 so that it is bent along the neutral plane.

According to various embodiments, the display 350 may include a first separation space g1. At least a portion of the first separation space g1 may be surrounded by the display panel 3540, the bending protection layer 3550, and the polarizing layer 3530.

Referring to FIGS. 7A and 7B, the first housing 310 (e.g., the first housing 310 of FIGS. 5A to 6) may include a (1-1)th sidewall 311 (e.g., the (1-1)th sidewall 311 of FIGS. 5A to 6), a (1-2)th sidewall 313 (e.g., the (1-2)th sidewall 313 of FIGS. 5A to 6), a (1-3)th sidewall 315 (e.g., the (1-3)th sidewall 315 of FIGS. 5A to 6), a support bracket 312, and a non-metal area 319.

According to an embodiment, the support bracket 312 may be configured to support at least a portion of the lower surface (e.g., the surface facing the -Z direction in FIG. 7A) of the display 350. According to an embodiment, the support bracket 312 may provide space for components (e.g., a battery or a circuit board) to be disposed.

According to an embodiment, the support bracket 312 may serve as the body of the first housing 310, with the (1-1)th sidewall 311 to the (1-3)th sidewall each connected (or coupled) to the support bracket 312 to form the side surfaces of the first housing 310.

According to an embodiment, at least a portion of the first housing 310 may be formed of a non-metal area 319 (e.g., polymer). According to an embodiment, at least a portion of the non-metal area 319 of the first housing 310 may form at least a portion of a first non-metal portion to a fourth non-metal portion (e.g., the first non-metal portion 319a to the fourth non-metal portion 319d of FIGS. 5A to 6).

According to an embodiment, the first protective member 440 may include a first protective portion 441 (e.g., the first protective portion 441 of FIG. 6) and a second protective portion 442 (e.g., the second protective portion 442 of FIG. 6).

According to an embodiment, the first protective member 440 may further include a protective protrusion 443 protruding from at least a portion of the first protective portion 441. According to an embodiment, the protective protrusion 443 of the first protective member 440 may be placed adjacent to a protrusion 314 protruding from at least a portion of the (1-1)th sidewall 311 (or the first metal portion 318a).

According to an embodiment, the second protective portion 442 may be connected to be inclined with respect to the first protective portion 441.

According to an embodiment, the first conductive member 421 may include a first conductive portion 421a (e.g., the first conductive portion 321a of FIG. 6) adhered to at least a portion of the first protective portion 441, and a second conductive portion 421b (e.g., the second conductive portion 321b of FIG. 6) adhered to at least a portion of the second protective portion 442.

According to an embodiment, the electronic device 101 may further include an insulating member 470 disposed between the first protective member 440 and the display 350. According to an embodiment, the insulating member 470 may block external foreign substances from entering through a gap between the display 350 and the first protective member 440. According to an embodiment, the insulating member 470 may be made of an elastic porous material (e.g., sponge) or a buffer material (e.g., mohair or brush).

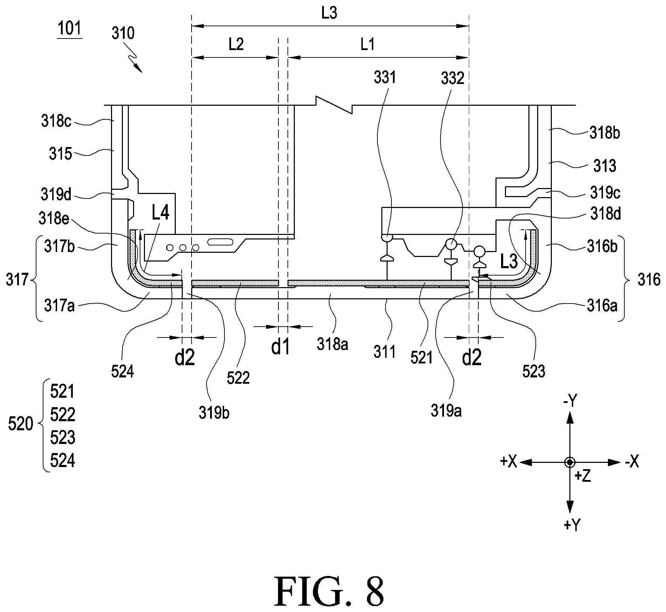

FIG. 8 is a front view illustrating a first housing and at least one conductive member according to an embodiment of the disclosure.

The embodiment of FIG. 8 may be combined with the embodiments of FIGS. 1 to 7B.

Referring to FIG. 8, the electronic device 101 (e.g., the electronic device 101 of FIGS. 1 to 7B) may include a first housing 310, at least one conductive member 520, a feeding portion 331, and a ground portion 332.

The configurations of the first housing 310, at least one conductive member 520, feeding portion 331, and ground portion 332 of FIG. 8 may be partially or entirely the same as the configurations of the first housing 310, at least one conductive member 320, feeding portion 331, and ground portion 332 of FIGS. 5A to 6.

According to an embodiment, the first housing 310 includes a (1-1)th sidewall 311 (e.g., the (1-1)th sidewall 311 of FIGS. 5A and 5B), a (1-2)th sidewall 313 (e.g., the (1-2)th sidewall 313 of FIGS. 5A and 5B), a (1-3)th sidewall 315 (e.g., the (1-3)th sidewall 315 of FIGS. 5A and 5B), a first corner area 316 (e.g., the first corner area 316 of FIGS. 5A and 5B), a second corner area 317 (e.g., the second corner area 317 of FIGS. 5A and 5B), a first metal portion 318a to a fifth metal portion 318e (e.g., the first to fifth metal portions 318a to 318e of FIGS. 5A and 5B), and a first non-metal portion 319a to a fourth non-metal portion 319d (e.g., the first to fourth non-metal portions 319a to 319d of FIGS. 5A and 5B).

According to an embodiment, the first corner area 316 may include a (1-1)th corner portion 316a (e.g., the (1-1)th corner portion 316a in FIGS. 5A and 5B) and a (1-2)th corner portion 316b (e.g., the (1-2)th corner portion 316b in FIGS. 5A and 5B).

According to an embodiment, the second corner area 317 may include a (2-1)th corner portion 317a (e.g., the (2-1)th corner portion 317a in FIGS. 5A and 5B) and a (2-2)th corner portion 317b (e.g., the (2-2)th corner portion 317b in FIGS. 5A and 5B).

According to an embodiment, at least one conductive member 520 may include a first conductive member 521 to a fourth conductive member 524 (e.g., the first conductive member 521 to the fourth conductive member 524 in FIG. 5B).

According to an embodiment, the first conductive member 521 or the second conductive member 522 may be adhered to at least a portion of a first protective member corresponding to the first metal portion 318a (e.g., the first protective member 340 in FIG. 6).

According to an embodiment, the third conductive member 523 may be adhered to at least a portion of the first protective member corresponding to the fourth metal portion 318d.

According to an embodiment, the fourth conductive member 524 may be adhered to at least a portion of the first protective member corresponding to the fifth metal portion 318e.

According to an embodiment, the length L1 of the first conductive member 521 in the first direction (e.g., the X-axis direction of FIG. 8) may be shorter than the length L3 of the first metal portion 318a in the first direction.

According to an embodiment, the length L2 of the second conductive member 522 in the first direction (e.g., the X-axis direction of FIG. 8) may be shorter than the length L3 of the first metal portion 318a in the first direction.

According to an embodiment, the length L1 of the first conductive member 521 in the first direction may differ from the length L2 of the second conductive member 522 in the first direction. For example, the length L1 of the first conductive member 521 may be longer than the length L2 of the second conductive member 522.

According to an embodiment, the length L1 of the first conductive member 521 in the first direction may be less than or equal to half a wavelength (1/2 wavelength or less) of the RF signal transmitted and/or received by the first antenna radiator formed by the first metal portion 318a.

According to an embodiment, the length L2 of the second conductive member 522 in the first direction may be less than or equal to half a wavelength (1/2 wavelength or less) of the RF signal transmitted and/or received by the first antenna radiator formed by the first metal portion 318a.

According to an embodiment, the length L3 (a length along a straight line) of the third conductive member 523 in an unfolded state may be half a wavelength (1/2 wavelength or less) of the RF signal transmitted and/or received by the fourth antenna radiator formed by the fourth metal portion 318d.

According to an embodiment, the length L4(a length along a straight line) of the fourth conductive member 524 in an unfolded state may be half (1/2 wavelength or less) of the wavelength of the RF signal transmitted and/or received by the fifth antenna radiator formed by the fifth metal portion 318e.

An electronic device (e.g., a portable terminal) includes a display having a flat surface or a flat surface and a curved surface. An electronic device with a conventional display may require an additional terminal when implementing a screen larger than the size of the electronic device due to the fixed structure of the display. Therefore, electronic devices including foldable or rollable displays have been researched.

In a foldable electronic device, a structure that utilizes the metal portion of the housing as an antenna radiator needs to be designed to reduce interference between the antenna radiator and surrounding components. Additionally, as the housing and display are arranged in close proximity in a foldable electronic device, a structure that prevents static electricity generated from the antenna radiator or components directly or indirectly connected to the antenna radiator from entering the display also needs to be designed.

According to an embodiment of the disclosure, it is possible to provide an antenna structure that limits the formation of static electricity without degrading the radiation performance of the antenna, and an electronic device including the same.

However, the problems to be solved by the disclosure are not limited to the above-mentioned issues, and various modifications can be made.

An antenna structure and an electronic device including the same, according to an embodiment of the disclosure, may prevent static electricity generated from components connected to the antenna and suppress parasitic resonance from occurring in the antenna radiator.

The effects obtainable from the disclosure are not limited to the effects mentioned above, and other effects not explicitly mentioned may become apparent to those skilled in the art to which the disclosure belongs from the following description.

According to an embodiment of the disclosure, an electronic device (e.g., the electronic device 101 of FIGS. 1 to 8) may include a housing (e.g., the housing 202 of FIG. 2, the first housing 210 of FIGS. 2 to 4, the first support member 212 of FIG. 4, or the first housing 310 of FIGS. 5A to 8), a display (e.g., the display 230 of FIGS. 2 to 4, or the display 350 of FIGS. 6 to 7B), a circuit board (e.g., the first circuit board 262 of FIG. 4), a protective member

(e.g., the first protective member 214 of FIG. 4, the protective member 340 of FIGS. 5A to 6, or the protective member 340 of FIG. 7), or at least one conductive member (e.g., the at least one conductive member 320 of FIG. 5B, the first conductive member 321 of FIG. 5B, or the second conductive member 322 of FIG. 5B). The housing may include a sidewall (e.g., the (1-1)th sidewall 311 of FIGS. 5A and 5B). The sidewall may include a first metal portion (e.g., the first metal portion 318a of FIGS. 5A and 5B), or a non-metal portion (e.g., the first non-metal portion 319a or the second non-metal portion 319b of FIGS. 5A and 5B). The display may be disposed within the housing. The substrate may be disposed within the housing and may be electrically connected to the first metal portion. The protective member may be disposed to surround at least a portion of the edge of the display and may be connected to the sidewall of the housing. At least one conductive member may be disposed on at least a portion of the protective member. The length (e.g., length L1 or length L2 of FIG. 5B) of the at least one conductive member in the first direction (e.g., the X-axis direction of FIG. 5B) may be smaller than the length (e.g., length L3 of FIG. 5B) of the first metal portion in the first direction (e.g., the X-axis direction of FIG. 5B).

According to an embodiment, the at least one conductive member may be disposed to overlap at least a portion of the first metal portion in the second direction (e.g., the - Y direction of FIG. 5B or the -Y direction of FIG. 6) from the first metal portion toward the display.

According to an embodiment, the at least one conductive member may include a first conductive member (e.g., the first conductive member 321 of FIG. 5B) or a second conductive member (e.g., the second conductive member 322 of FIG. 5B). The first conductive member may be disposed such that at least a portion thereof overlaps with the first portion of the first metal portion in the second direction. The second conductive member may be disposed such that at least a portion overlaps a second portion of the first metal portion, which is different from the first portion of the first metal portion, in the second direction. The second conductive member may be spaced apart from the first conductive member in the first direction.

According to an embodiment, the separation distance (e.g., the separation distance d1 in FIG. 5B) between the first conductive member and the second conductive member in the first direction may be substantially 1.1 mm or less.

According to an embodiment, the lengths of the first conductive member and the second conductive member in the first direction may be substantially the same.

According to an embodiment, the lengths of the first conductive member (e.g., the first conductive member 521 of FIG. 8) and the second conductive member (e.g., the second conductive member 522 of FIG. 8) in the first direction may be different from each other.

According to an embodiment, the electronic device may further include a communication module disposed on a circuit board (e.g., the communication module 190 of FIG. 1). The communication module may be electrically connected to the first metal portion. The first metal portion may be configured to transmit and/or receive a radio frequency (RF) signal having a first wavelength.

According to an embodiment, the length of the at least one conductive member in the first direction may be less than or equal to half of the first wavelength.

According to an embodiment, the housing may include a first housing (e.g., the first housing 210 of FIGS. 2 to 4, or the first housing 310 of FIGS. 5 to 8) and a second housing (e.g., the second housing 220 of FIGS. 2 to 4). The second housing may be configured to rotate relative to the first housing. The display may include a first display area (e.g., the first display area 231 of FIG. 2), a second display area (e.g., the second display area 232 of FIG. 2), or a folding area (e.g., the folding area 233 of FIG. 2). The first display area may be disposed on the first housing. The second display area may be disposed on the second housing. The folding area may connect the first display area and the second display area.

According to an embodiment, the protective member may include a first protective portion (e.g., the first protective portion 341 of FIG. 6 or the first protective portion 441 of FIG. 7A) or a second protective portion (e.g., the second protective portion 342 of FIG. 6 or the second protective portion 442 of FIG. 7A). The first protective portion may be connected to at least a portion of the sidewall. The second protective portion may extend from the first protective portion and may be disposed to be stepped with respect to the display.

According to an embodiment, the at least one conductive member may include a first conductive portion (e.g., the first conductive portion 321a of FIG. 6 or the first conductive portion 421a of FIG. 7A) or a second conductive portion (e.g., the second conductive portion 321b of FIG. 6 or the second conductive portion 421b of FIG. 7A). The first conductive portion may be adhered to at least a portion of the first protective portion. The second conductive portion may be adhered to at least a portion of the second protective portion.

According to an embodiment, the electronic device may include a feeding portion (e.g., the feeding portion 331 of FIG. 5A) or a ground portion (e.g., the ground portion 332 of FIG. 5A). The feeding portion may be electrically connected to a communication module disposed on the circuit board. The ground portion may be electrically connected to the ground plane of the circuit board. The first metal portion may include a first connector (e.g., the first connector 311a of FIG. 5A) or a second connector (e.g., the second connector 311b of FIG. 5A). The first connector may be electrically connected to the feeding portion. The second connector may be electrically connected to the ground portion.

According to an embodiment, the conductive member may include a conductive tape.

According to an embodiment, the non-metal portion may include a first non-metal portion (e.g., the first non-metal portion 319a of FIG. 5A) or a second non-metal portion (e.g., the second non-metal portion 319b of FIG. 5A). The first non-metal portion may be connected to at least a portion of the first metal portion. The second non-metal portion may be connected to another portion of the first metal portion that is different from at least a portion of the first metal portion.

According to an embodiment, the electronic device or the first housing may further include a second metal portion (e.g., the second metal portion 318d of FIGS. 5A and 5B) or a third metal portion (e.g., the third metal portion 318e of FIGS. 5A and 5B). Each of the first metal portion to the third metal portion may form a different antenna radiator.

According to an embodiment of the disclosure, an electronic device (e.g., the electronic device 101 of FIGS. 1 to 8) may include a housing (e.g., the housing 202 of FIG. 2), a hinge structure (e.g., the hinge structure 280 of FIG. 4), a display (e.g., the display 230 of FIGS. 2 to 4, or the display 350 of FIGS. 6 to 7B), a circuit board (e.g., the first circuit board 262 of FIG. 4), a first protective member (e.g., the first protective member 214 of FIG. 4, the protective member 340 of FIGS. 5A to 6, or the protective member 340 of FIG. 7), and a second protective member (e.g., the second protective member 224 of FIG. 4), or at least one conductive member (e.g., the at least one conductive member 320 of FIG. 5B, the first conductive member 321 of FIG. 5B, or the second conductive member 322 of FIG. 5B). The housing may include a first housing (e.g., the first housing 210 of FIGS. 2 to 4, the first support member 212 of FIG. 4, or the first housing 310 of FIGS. 5A to 8) or a second housing (e.g., the second housing 220 of FIGS. 2 to 4). The second housing may be configured to provide relative motion with respect to the first housing. The hinge structure may rotatably connect the first housing and the second housing. The display may include a first display area (e.g., the first display area 231 of FIG. 2), a second display area (e.g., the second display area 232 of FIG. 2), or a folding area (e.g., the folding area 233 of FIG. 2). The first display area may be disposed on the first housing. The second display area may be disposed on the second housing. The folding area may connect the first display area and the second display area. The first protective member may be disposed to surround at least a portion of the edge of the first display area. The first protective member may be connected to the first housing. The second protective member may be disposed to surround at least a portion of the edge of the second display area. The second protective member may be connected to the second housing. At least one conductive member may be disposed on at least a portion of the first protective member. The first housing may include a sidewall (e.g., the (1-1)th sidewall 311 of FIGS. 5A and 5B). The sidewall may include a first metal portion (e.g., the first metal portion 318a of FIGS. 5A and 5B) or a non-metal portion (e.g., the first non-metal portion 319a or the second non-metal portion 319b of FIGS. 5A and 5B). A length (e.g., the length L1 or the length L2 of FIG. 5B) of the at least one conductive member in the first direction (e.g., the X-axis direction of FIG. 5B) may be smaller than the length (e.g., the length L3 of FIG. 5B) of the first metal portion in the first direction (e.g., the X-axis direction of FIG. 5B).

According to an embodiment, at least one conductive member may be disposed to overlap at least a portion of the first metal portion in a second direction (e.g., the Y-axis direction of FIG. 5B or the Y-axis direction of FIG. 6) from the first metal portion toward the display.

According to an embodiment, the electronic device may further include a communication module (e.g., the communication module 190 of FIG. 1) disposed on a circuit board. The communication module may be electrically connected to the first metal portion.

According to an embodiment, at least one conductive member may include a first conductive member (e.g., the first conductive member 321 of FIG. 5B) or a second conductive member (e.g., the second conductive member 322 of FIG. 5B). The first conductive member may be adhered to at least a portion of the first protective member. The second conductive member may be adhered to a portion of the first protective member that is different from the at least a portion of the first protective member.

According to an embodiment, an electronic device (e.g., the electronic device 101 of FIGS. 1 to 8) may include a housing (e.g., the housing 202 of FIG. 2), a hinge structure (e.g., the hinge structure 280 of FIG. 4), a display (e.g., the display 230 of FIGS. 2 to 4, or the display 350 of FIGS. 6 to 7B), a circuit board (e.g., the first circuit board 262 of FIG. 4), a first protective member (e.g., the first protective member 214 of FIG. 4, the protective member 340 of FIGS. 5A to 6, or the protective member 340 of FIG. 7), a second protective member (e.g., the second protective member 224 of FIG. 4), or at least one conductive member (e.g., the at least one conductive member 320 of FIG. 5B, the first conductive member 321 of FIG. 5B, or the second conductive member 322 of FIG. 5B). The housing may include a first housing (e.g., the first housing 210 of FIGS. 2 to 4, the first support member 212 of FIG. 4, or the first housing 310 of FIGS. 5A to 8), or a second housing (e.g., the second housing 220 of FIGS. 2 to 4). The second housing may be configured to provide relative movement with respect to the first housing. The hinge structure may rotatably connect the first housing and the second housing. The display may include a first display area (e.g., the first display area 231 of FIG. 2), a second display area (e.g., the second display area 232 of FIG. 2), or a folding area (e.g., the folding area 233 of FIG. 2). The first display area may be disposed on the first housing. The second display area may be disposed on the second housing. The folding area may connect the first display area and the second display area. The first protective member may be disposed to surround at least a portion of the edge of the first display area. The first protective member may be connected to the first housing. The second protective member may be disposed to surround at least a portion of the edge of the second display area. The second protective member may be connected to the second housing. At least one conductive member may be disposed on at least a portion of the first protective member. The first housing may include a sidewall (e.g., the (1-1)th sidewall 311 of FIGS. 5A and 5B). The sidewall may include a first metal portion (e.g., the first metal portion 318a of FIGS. 5A and 5B) or a non-metal portion (e.g., the first non-metal portion 319a or the second non-metal portion 319b of FIGS. 5A and 5B). The first metal portion may be configured to transmit and/or receive an RF signal having a first wavelength. The length of at least one conductive member in the first direction (e.g., the X-axis direction of FIG. 5B) (e.g., the length L1 or the length L2 of FIG. 5B) may be less than or equal to half of the first wavelength.

As described above, while the disclosure has been described with reference to specific embodiments, it will be apparent to those skilled in the art that various modifications in form and detail may be made without departing from the scope of the disclosure.

## Claims

1. An electronic device (101), comprising:
a housing (202, 210, 212, 310) including a sidewall (311) including a first metal portion (318a), a first non-metal portion (319a), and a second non-metal portion (319b), wherein the first metal portion (318a) is disposed between the first non-metal portion (319a) and the second non-metal portion (319b) in a first direction;
a display (230, 350) disposed in the housing;
a circuit board (262) disposed in the housing and electrically connected to the first metal portion;
a protective member (214, 340, 440) disposed to surround at least a portion of an edge of the display and connected to the sidewall of the housing;
a first conductive member (321) and a second conductive member (322) disposed on at least a portion of the protective member and spaced apart from each other in the first direction; and
a feeding portion (331) electrically connected to a communication module (190) disposed on the circuit board (262); and
a ground portion (332) electrically connected to a ground plane of the circuit board,
wherein the first metal portion is electrically connected to the feeding portion (331) and the ground portion (332) and is configured to transmit and/or receive a radio frequency signal having a first wavelength, and
wherein lengths (L1, L2) of the first conductive member and the second conductive member in the first direction are smaller than a length (L3) of the first metal portion in the first direction,
wherein the lengths of the first conductive member and the second conductive member in the first direction are less than or equal to half of the first wavelength.

2. The electronic device (101) of claim 1, wherein the first conductive member (321) and the second conductive member (322) are disposed to overlap the first metal portion (318a) in a second direction from the first metal portion toward the display (230, 350).

3. The electronic device (101) of claim 2,
wherein the first conductive member (321) is disposed to at least partially overlap a first portion of the first metal portion in the second direction, and
wherein the second conductive member (322) is disposed to at least partially overlap a second portion of the first metal portion, different from the first portion, in the second direction.

4. The electronic device (101) of any one of claims 1 to 3,
wherein a separation distance (d1) between the first conductive member (321) and the second conductive member (322) in the first direction is substantially 1.1 mm or less.

5. The electronic device (101) of any one of claims 1 to 4,
wherein the lengths of the first conductive member (321) and the second conductive member (322) in the first direction are substantially the same.

6. The electronic device (101) of any one of claims 1 to 5,
wherein the lengths of the first conductive member (321) and the second conductive member (322) in the first direction are different from each other.

7. The electronic device (101) of any one of claims 1 to 6,
wherein the housing (202) comprises:
a first housing (210, 310) and a second housing (220) configured to rotate relative to the first housing,
wherein the display comprises:
a first display area (231) disposed on the first housing, a second display area (232) disposed on the second housing, and a folding area (233) connecting the first display area and the second display area.

8. The electronic device (101) of any one of claims 1 to 7, wherein the protective member (214, 340, 440) comprises:
a first protective portion (341, 441) connected to at least a portion of the sidewall (311), and
a second protective portion (342, 442) extending from the first protective portion and disposed to be stepped with respect to the display (230, 350).

9. The electronic device (101) of claim 8, wherein the first conductive member (321) comprises:
a first conductive portion (321a, 421a) adhered to at least a portion of the first protective portion (341, 441), and
a second conductive portion (321b, 421b) adhered to at least a portion of the second protective portion (342, 442).

10. The electronic device (101) of any one of claims 1 to 9,
wherein the first metal portion comprises:
a first connector (311a) electrically connected to the feeding portion, and a second connector (311b) electrically connected to the ground portion.

11. The electronic device (101) of any one of claims 1 to 10, wherein the first conductive member (321) comprises a conductive tape.

12. The electronic device (101) of any one of claims 1 to 11,
wherein the first non-metal portion (319a) is connected to at least a portion of the first metal portion, and the second non-metal portion (319b) is connected to another portion different from the at least one portion of the first metal portion.

13. The electronic device (101) of any one of claims 1 to 12, further comprising:
a second metal portion (318d) connected to the first non-metal portion (319a), and
a third metal portion (318e) connected to the second non-metal portion (319b),
wherein each of the first metal portion to the third metal portion forms different antenna radiator.

## Patentansprüche

1. Elektronische Vorrichtung (101), umfassend:
ein Gehäuse (202, 210, 212, 310), das eine Seitenwand (311) beinhaltet, die einen ersten Metallabschnitt (318a), einen ersten Nichtmetallabschnitt (319a) und einen zweiten Nichtmetallabschnitt (319b) beinhaltet, wobei der erste Metallabschnitt (318a) in einer ersten Richtung zwischen dem ersten Nichtmetallabschnitt (319a) und dem zweiten Nichtmetallabschnitt (319b) angeordnet ist;
eine Anzeige (230, 350), die in dem Gehäuse angeordnet ist;
eine Platine (262), die in dem Gehäuse angeordnet ist und elektrisch mit dem ersten Metallabschnitt verbunden ist;
ein Schutzelement (214, 340, 440), das so angeordnet ist, dass es mindestens einen Abschnitt einer Kante der Anzeige umgibt, und mit der Seitenwand des Gehäuses verbunden ist;
ein erstes leitfähiges Element (321) und ein zweites leitfähiges Element (322), die an mindestens einem Abschnitt des Schutzelements angeordnet sind und in der ersten Richtung voneinander beabstandet sind; und
einen Zufuhrabschnitt (331), der elektrisch mit einem Kommunikationsmodul (190) verbunden ist, das auf der Platine (262) angeordnet ist; und
einen Masseabschnitt (332), der elektrisch mit einer Masseebene der Platine verbunden ist,
wobei der erste Metallabschnitt elektrisch mit dem Zufuhrabschnitt (331) und dem Masseabschnitt (332) verbunden und dazu konfiguriert ist, ein Hochfrequenzsignal mit einer ersten Wellenlänge zu senden und/oder zu empfangen, und
wobei Längen (L1, L2) des ersten leitfähigen Elements und des zweiten leitfähigen Elements in der ersten Richtung kürzer sind als eine Länge (L3) des ersten Metallabschnitts in der ersten Richtung,
wobei die Längen des ersten leitfähigen Elements und des zweiten leitfähigen Elements in der ersten Richtung kleiner als oder gleich der Hälfte der ersten Wellenlänge sind.

2. Elektronische Vorrichtung (101) nach Anspruch 1, wobei das erste leitfähige Element (321) und das zweite leitfähige Element (322) so angeordnet sind, dass sie den ersten Metallabschnitt (318a) in einer zweiten Richtung von dem ersten Metallabschnitt zu der Anzeige (230, 350) überlappen.

3. Elektronische Vorrichtung (101) nach Anspruch 2,
wobei das erste leitfähige Element (321) so angeordnet ist, dass es einen ersten Abschnitt des ersten Metallabschnitts in der zweiten Richtung mindestens teilweise überlappt, und
wobei das zweite leitfähige Element (322) so angeordnet ist, dass es einen zweiten Abschnitt des ersten Metallabschnitts, der sich von dem ersten Abschnitt unterscheidet, in der zweiten Richtung mindestens teilweise überlappt.

4. Elektronische Vorrichtung (101) nach einem der Ansprüche 1 bis 3,
wobei ein Trennungsabstand (d1) zwischen dem ersten leitfähigen Element (321) und dem zweiten leitfähigen Element (322) in der ersten Richtung im Wesentlichen 1,1 mm oder weniger beträgt.

5. Elektronische Vorrichtung (101) nach einem der Ansprüche 1 bis 4,
wobei die Längen des ersten leitfähigen Elements (321) und des zweiten leitfähigen Elements (322) in der ersten Richtung im Wesentlichen gleich sind.

6. Elektronische Vorrichtung (101) nach einem der Ansprüche 1 bis 5,
wobei sich die Längen des ersten leitfähigen Elements (321) und des zweiten leitfähigen Elements (322) in der ersten Richtung voneinander unterscheiden.

7. Elektronische Vorrichtung (101) nach einem der Ansprüche 1 bis 6,
wobei das Gehäuse (202) Folgendes umfasst:
ein erstes Gehäuse (210, 310) und ein zweites Gehäuse (220), das dazu konfiguriert ist, sich in Bezug auf das erste Gehäuse zu drehen,
wobei die Anzeige Folgendes umfasst:
eine erste Anzeigefläche (231), die an dem ersten Gehäuse angeordnet ist, eine zweite Anzeigefläche (232), die an dem zweiten Gehäuse angeordnet ist, und eine Faltfläche (233), die die erste Anzeigefläche und die zweite Anzeigefläche verbindet.

8. Elektronische Vorrichtung (101) nach einem der Ansprüche 1 bis 7, wobei das Schutzelement (214, 340, 440) Folgendes umfasst:
einen ersten Schutzabschnitt (341, 441), der mit mindestens einem Abschnitt der Seitenwand (311) verbunden ist, und
einen zweiten Schutzabschnitt (342, 442), der sich von dem ersten Schutzabschnitt erstreckt und so angeordnet ist, dass er in Bezug auf die Anzeige (230, 350) abgestuft ist.

9. Elektronische Vorrichtung (101) nach Anspruch 8, wobei das erste leitfähige Element (321) Folgendes umfasst:
einen ersten leitfähigen Abschnitt (321a, 421a), der an mindestens einem Abschnitt des ersten Schutzabschnitts (341, 441) haftet, und
einen zweiten leitfähigen Abschnitt (321b, 421b), der an mindestens einem Abschnitt des zweiten Schutzabschnitts (342, 442) haftet.

10. Elektronische Vorrichtung (101) nach einem der Ansprüche 1 bis 9,
wobei der erste Metallabschnitt Folgendes umfasst:
einen ersten Verbinder (311a), der elektrisch mit dem Zufuhrabschnitt verbunden ist, und einen zweiten Verbinder (311b), der elektrisch mit dem Masseabschnitt verbunden ist.

11. Elektronische Vorrichtung (101) nach einem der Ansprüche 1 bis 10, wobei das erste leitfähige Element (321) ein leitfähiges Band umfasst.

12. Elektronische Vorrichtung (101) nach einem der Ansprüche 1 bis 11,
wobei der erste Nichtmetallabschnitt (319a) mit mindestens einem Abschnitt des ersten Metallabschnitts verbunden ist und der zweite Nichtmetallabschnitt (319b) mit einem anderen Abschnitt verbunden ist, der sich von dem mindestens einen Abschnitt des ersten Metallabschnitts unterscheidet.

13. Elektronische Vorrichtung (101) nach einem der Ansprüche 1 bis 12, ferner umfassend:
einen zweiten Metallabschnitt (318d), der mit dem ersten Nichtmetallabschnitt (319a) verbunden ist, und
einen dritten Metallabschnitt (318e), der mit dem zweiten Nichtmetallabschnitt (319b) verbunden ist,
wobei jeder von dem ersten Metallabschnitt bis dritten Metallabschnitt einen anderen Antennenstrahler bildet.

## Revendications

1. Dispositif électronique (101), comprenant :
un boîtier (202, 210, 212, 310) comprenant une paroi latérale (311) comprenant une première partie métallique (318a), une première partie non métallique (319a) et une seconde partie non métallique (319b), ladite première partie métallique (318a) étant disposée entre la première partie non métallique (319a) et la seconde partie non métallique (319b) dans une première direction ;
un dispositif d'affichage (230, 350) disposé dans le boîtier ;
une carte de circuit (262) disposée dans le boîtier et raccordée électriquement à la première partie métallique ;
un élément de protection (214, 340, 440) disposé pour entourer au moins une partie d'un bord du dispositif d'affichage et raccordé à la paroi latérale du boîtier ;
un premier élément conducteur (321) et un second élément conducteur (322) disposés sur au moins une partie de l'élément de protection et espacés l'un de l'autre dans la première direction ; et
une partie d'alimentation (331) électriquement raccordée à un module de communication (190) disposé sur la carte de circuit (262) ; et
une partie de masse (332) raccordée électriquement à un plan de masse de la carte de circuit,
ladite première partie métallique étant raccordée électriquement à la partie d'alimentation (331) et à la partie de masse (332) et étant conçue pour émettre et/ou recevoir un signal radiofréquence possédant une première longueur d'onde, et
des longueurs (L1, L2) du premier élément conducteur et du second élément conducteur dans la première direction étant inférieures à une longueur (L3) de la première partie métallique dans la première direction,
lesdites longueurs du premier élément conducteur et du second élément conducteur dans la première direction étant inférieures ou égales à la moitié de la première longueur d'onde.

2. Dispositif électronique (101) de la revendication 1, ledit premier élément conducteur (321) et ledit second élément conducteur (322) étant disposés pour chevaucher la première partie métallique (318a) dans une seconde direction allant de la première partie métallique vers le dispositif d'affichage (230, 350).

3. Dispositif électronique (101) de la revendication 2,
ledit premier élément conducteur (321) étant disposé pour chevaucher au moins partiellement une première partie de la première partie métallique dans la seconde direction, et
ledit second élément conducteur (322) étant disposé pour chevaucher au moins partiellement une seconde partie de la première partie métallique, différente de la première partie, dans la seconde direction.

4. Dispositif électronique (101) de l'une quelconque des revendications 1 à 3,
une distance de séparation (d1) entre le premier élément conducteur (321) et le second élément conducteur (322) dans la première direction étant sensiblement de 1,1 mm ou moins.

5. Dispositif électronique (101) de l'une quelconque des revendications 1 à 4,
lesdites longueurs du premier élément conducteur (321) et du second élément conducteur (322) dans la première direction étant sensiblement les mêmes.

6. Dispositif électronique (101) de l'une quelconque des revendications 1 à 5,
lesdites longueurs du premier élément conducteur (321) et du second élément conducteur (322) dans la première direction étant différentes l'une de l'autre.

7. Dispositif électronique (101) de l'une quelconque des revendications 1 à 6,
ledit boîtier (202) comprenant :
un premier boîtier (210, 310) et un second boîtier (220) conçu pour tourner par rapport au premier boîtier,
ledit dispositif d'affichage comprenant :
une première zone d'affichage (231) disposée sur le premier boîtier, une seconde zone d'affichage (232) disposée sur le second boîtier, et une zone de pliage (233) raccordant la première zone d'affichage et la seconde zone d'affichage.

8. Dispositif électronique (101) de l'une quelconque des revendications 1 à 7, ledit élément de protection (214, 340, 440) comprenant :
une première partie de protection (341, 441) raccordée à au moins une partie de la paroi latérale (311), et
une seconde partie de protection (342, 442) s'étendant à partir de la première partie de protection et disposée pour être étagée par rapport au dispositif d'affichage (230, 350).

9. Dispositif électronique (101) de la revendication 8, ledit premier élément conducteur (321) comprenant :
une première partie conductrice (321a, 421a) adhérant à au moins une partie de la première partie de protection (341, 441), et
une seconde partie conductrice (321b, 421b) adhérant à au moins une partie de la seconde partie de protection (342, 442).

10. Dispositif électronique (101) de l'une quelconque des revendications 1 à 9,
ladite première partie métallique comprenant :
un premier connecteur (311a) raccordé électriquement à la partie d'alimentation, et un second connecteur (311b) raccordé électriquement à la partie de masse.

11. Dispositif électronique (101) de l'une quelconque des revendications 1 à 10, ledit premier élément conducteur (321) comprenant une bande conductrice.

12. Dispositif électronique (101) selon l'une quelconque des revendications 1 à 11,
ladite première partie non métallique (319a) étant raccordée à au moins une partie de la première partie métallique et ladite seconde partie non métallique (319b) étant raccordée à une autre partie différente de ladite au moins une partie de la première partie métallique.

13. Dispositif électronique (101) de l'une quelconque des revendications 1 à 12, comprenant en outre :
une deuxième partie métallique (318d) raccordée à la première partie non métallique (319a), et
une troisième partie métallique (318e) raccordée à la seconde partie non métallique (319b),
chacune de la première partie métallique à la troisième partie métallique formant un élément rayonnant d'antenne différent.
